# EUROPÄISCHE PATENTSCHRIFT

(11) **EP 3 698 881 B1**
(45) Veröffentlichungstag und Bekanntmachung des Hinweises auf die Patenterteilung: **15.11.2023**
(21) Anmeldenummer: 20170279.2
(22) Anmeldetag: 01.12.2017
(51) Int. Cl.: B05B 1/16, B05B 13/04, B05B 12/04, B41J 3/407, B25J 11/00

(54) **BESCHICHTUNGSVERFAHREN UND ENTSPRECHENDE BESCHICHTUNGSEINRICHTUNG**
COATING METHOD AND COATING APPARATUS FOR SAME
PROCÉDÉ DE REVÊTEMENT ET DISPOSITIF DE REVÊTEMENT CORRESPONDANT

(30) Priorität: 14.12.2016 DE 102016014944
(43) Veröffentlichungstag der Anmeldung: 26.08.2020
(62) Teilanmeldung aus: 17807871.3
(73) Patentinhaber: Dürr Systems AG, 74321 Bietigheim-Bissingen (DE)
(72) Erfinder: Fritz, Hans-Georg, 73760 Ostfildern (DE); Wöhr, Benjamin, 74363 Eibensbach (DE); Kleiner, Marcus, 74354 Besigheim (DE); Bubek, Moritz, 71640 Ludwigsburg (DE); Beyl, Timo, 74354 Besigheim (DE); Herre, Frank, 71739 Oberriexingen (DE); Sotzny, Steffen, 71720 Oberstenfeld (DE)
(74) Vertreter: v. Bezold & Partner Patentanwälte - PartG mbB

(56) Entgegenhaltungen:
- WO-A1-2010/046064
- DE-A1-102010 019 612
- DE-A1-102013 002 412

## Beschreibung

Die Erfindung betrifft ein Beschichtungsverfahren zur Beschichtung von Bauteilen mit einem Düsenapplikator mit mehreren Düsen, insbesondere zur Lackierung von Kraftfahrzeugkarosseriebauteilen.

Zur Serienlackierung von Kraftfahrzeugkarosseriebauteilen werden bisher als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Eine neuere Entwicklungslinie sieht dagegen als Applikationsgerät sogenannte Druckköpfe vor, wie sie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl, der sich nahezu vollständig auf dem zu lackierenden Bauteil niederschlägt, so dass nahezu kein Overspray entsteht.

Derartige Druckköpfe sind jedoch für die Flächenbeschichtung bisher nicht hinreichend gut geeignet, da bei der Serienlackierung von Kraftfahrzeugkarosseriebauteilen hohe Flächenbeschichtungsleistungen und Genauigkeiten erforderlich sind.

Ein weiterer Nachteil der bekannten Druckköpfe besteht darin, dass nicht alle derzeit bekannten Lackeffekte realisiert werden können.

Weiterhin besteht das Problem, dass Umgriffe um Bauteilkanten und komplexe Oberflächengeometrien auf der Außenhaut oder im Innenbereich der Kraftfahrzeugkarosseriebauteile nicht befriedigend lackiert werden können.

Zum technischen Hintergrund der Erfindung ist auch hinzuweisen auf EP 3 002 128 A2, US 2001/0019340 A1 und EP 2 196 267 A2.

Schließlich offenbart WO 2010/046064 A1 eine Beschichtungseinrichtung, die komplette Karosserien und Details beschichten kann.

Der Erfindung liegt deshalb die Aufgabe zugrunde, die Möglichkeit zu schaffen, derartige Düsenapplikatoren (z.B. Druckköpfe) für die Serienlackierung von Kraftfahrzeugkarosseriebauteilen zu verbessern.

Diese Aufgabe wird durch ein erfindungsgemäßes Betriebsverfahren bzw. eine erfindungsgemäße Beschichtungseinrichtung gemäß den unabhängigen Ansprüchen gelöst.

Die Erfindung umfasst die allgemeine technische Lehre, den Düsenapplikator (z.B. Druckkopf) bei der Beschichtung flexibel anzusteuern, beispielsweise durch eine flexible fluidtechnische bzw. ventiltechnische Ansteuerung oder durch eine flexible mechanische Führung des Düsenapplikators.

Der im Rahmen der Erfindung verwendete Begriff eines Düsenapplikators ist allgemein zu verstehen und dient zunächst nur zur Abgrenzung gegenüber herkömmlichen Zerstäubern (z.B. Rotationszerstäuber, Ultraschallzerstäuber, Airmix-Zerstäuber, Airless-Zerstäuber, etc.), die keinen eng begrenzten Beschichtungsmittelstrahl abgeben, sondern einen Sprühnebel des zu applizierenden Beschichtungsmittels. Der Begriff eines Düsenapplikators impliziert dagegen, dass aus mindestens einer Düse ein Beschichtungsmittelstrahl abgegeben wird, der räumlich relativ eng begrenzt ist. Vorzugsweise handelt es sich bei dem Düsenapplikator jedoch um einen Druckkopf, wie er an sich aus dem Stand der Technik bekannt ist und beispielsweise in DE 10 2013 002 412 A1, US 9,108,424 B2 und DE 10 2010 019 612 A1 beschrieben ist.

In einem bevorzugten Ausführungsbeispiel der Erfindung ist der Düsenapplikator zur Applikation eines Lacks (z.B. Basislack, Klarlack, Wasserlack, lösemittelbasierter Lack, etc.) ausgelegt. Der im Rahmen der Erfindung verwendete Begriff eines Beschichtungsmittels ist jedoch nicht auf Lacke beschränkt, sondern kann auch andere Beschichtungsmittel umfassen, wie beispielsweise Klebstoffe, Dämmstoffe, Dichtstoffe, Primer, etc., um nur einige Beispiele zu nennen.

Das erfindungsgemäße Beschichtungsverfahren sieht vor, dass der Düsenapplikator über die Oberfläche des zu beschichtenden Bauteils geführt wird, was vorzugsweise mittels eines mehrachsigen Beschichtungsroboters mit einer seriellen Roboterkinematik und mindestens sechs oder sieben beweglichen Roboterachsen geschieht.

Dabei wird der Düsenapplikator erfindungsgemäß flexibel angesteuert. Beispielsweise kann der Düsenapplikator dabei ventiltechnisch flexibel angesteuert werden, indem beispielsweise Steuerventile in dem Düsenapplikator die Düsen freigeben bzw. versperren, um die Beschichtungsmittelabgabe zu steuern. Eine andere Möglichkeit der flexiblen Ansteuerung besteht darin, dass die zugeführte und applizierte Beschichtungsmittelmenge flexibel angepasst wird. Ferner besteht die Möglichkeit, dass der Düsenapplikator mechanisch flexibel angesteuert wird, indem der Düsenapplikator beispielsweise während der Beschichtung gedreht, gekippt oder sonst wie flexibel positioniert bzw. ausgerichtet wird, z.B. im Wesentlichen orthogonal zur Beschichtungsfläche ausgerichtet wird.

Gemäß der Erfindung wird der Düsenapplikator wahlweise betrieben mit einer großen Flächenbeschichtungsleistung oder mit einer kleinen Flächenbeschichtungsleistung.

Die große Flächenbeschichtungsleistung wird dann gewählt, um große Bauteiloberflächen zu beschichten, beispielsweise Außenflächen von Kraftfahrzeugkarosseriebauteilen.

Die kleine Flächenbeschichtungsleistung des Düsenapplikators wird dagegen gewählt, wenn Details zu beschichten sind, insbesondere im Innenraum oder an Kanten oder Designlinien der zu lackierenden Kraftfahrzeugkarosseriebauteile.

Die Umschaltung zwischen der großen Flächenbeschichtungsleistung und der kleinen Flächenbeschichtungsleistung kann automatisch und programmgesteuert erfolgen in Abhängigkeit von der Art des jeweiligen Farbauftreffpunkts.

Falls der Farbauftreffpunkt beispielsweise auf einer großflächigen Dachfläche eines zu lackierenden Kraftfahrzeugkarosseriebauteils liegt, so sollte der Düsenapplikator das Beschichtungsmittel mit einer großen Flächenbeschichtungsleistung beschichten.

Falls der Farbauftreffpunkt dagegen im Innenraum oder an einer Kante oder einer Designlinie des zu lackierenden Kraftfahrzeugkarosseriebauteils liegt, so sollte der Düsenapplikator vorzugsweise mit der kleinen Flächenbeschichtungsleistung betrieben werden.

In diesem Zusammenhang ist zu erwähnen, dass die Erfindung nicht beschränkt ist auf eine bestimmte große Flächenbeschichtungsleistung und eine bestimmte kleine Flächenbeschichtungsleistung, d.h. auf zwei verschiedene Flächenbeschichtungsleistungen. Es ist vielmehr im Rahmen der Erfindung auch möglich, dass die Flächenbeschichtungsleistung kontinuierlich angepasst wird.

In einem bevorzugten Ausführungsbeispiel der Erfindung sind die Düsen in dem Düsenapplikator in einer Düsenreihe nebeneinander angeordnet, wobei auch mehrere parallele Düsenreihen mit jeweils mehreren Düsen möglich sind. Der Düsenapplikator wird hierbei entlang einer vorgegebenen, programmierten ("geteachten") Bewegungsbahn über die Oberfläche des zu beschichtenden Bauteils (z.B. Kraftfahrzeugkarosseriebauteil) bewegt, was - wie bereits vorstehend kurz erwähnt wurde - mittels eines mehrachsigen Beschichtungsroboters mit einer seriellen Roboterkinematik und mindestens sechs oder sieben beweglichen Roboterachsen geschehen kann.

Falls der Düsenapplikator nun mit der großen Flächenbeschichtungsleistung betrieben werden soll, so wird der Düsenapplikator um die Strahlachse der Beschichtungsmittelstrahlen so gedreht, dass die Düsenreihe quer (z.B. rechtwinklig) zu der Bewegungsbahn ausgerichtet ist. Der Düsenapplikator überstreicht dadurch pro Zeiteinheit eine relativ große Bauteilfläche. Die im Rahmen der Erfindung verwendete Formulierung einer Ausrichtung des Düsenreihe quer zu der Bewegungsbahn bedeutet vorzugsweise, dass der Winkel zwischen der Düsenreihe und der Bewegungsbahn größer ist als 50°, 60°, 75°, 80° oder 85°.

Falls der Düsenapplikator dagegen mit der kleinen Flächenbeschichtungsleistung betrieben werden soll, so wird der Düsenapplikator in einer bevorzugten Variante um die Strahlachse so gedreht, dass die Düsenreihe längs (z.B. parallel) zu der Bewegungsbahn ausgerichtet ist. Der Düsenapplikator überstreicht dann pro Zeiteinheit eine relativ geringe Bauteilfläche. Die im Rahmen der Erfindung verwendete Formulierung einer Ausrichtung des Düsenreihe längs zu der Bewegungsbahn bedeutet vorzugsweise, dass der Winkel zwischen der Düsenreihe und der Bewegungsbahn kleiner ist als 60°, 50°, 40°, 30°, 25°, 20°, 15°, 10° oder 5°.

Hierbei ist auch zu erwähnen, dass der Düsenapplikator während der Bewegung gedreht werden kann, d.h. innerhalb einer Beschichtungsbahn. Davon zu unterscheiden ist eine Drehung des Düsenapplikators nur zu Beginn oder am Ende einer Bewegungsbahn oder an den Wendepunkten einer mäanderförmigen Bewegungsbahn.

Es wurde bereits vorstehend kurz erwähnt, dass der Düsenapplikator mehrere parallele Düsenreihen aufweisen kann, in denen jeweils mehrere Düsen nebeneinander angeordnet sind. Hierbei besteht die Möglichkeit, dass einzelne oder mehrere Düsenreihen des Düsenapplikators in Abhängigkeit von der gewünschten Flächenbeschichtungsleistung aktiviert oder deaktiviert werden.

Falls der Düsenapplikator mit einer kleinen Flächenbeschichtungsleistung betrieben werden soll, so werden vorzugsweise nicht alle Düsenreihen des Düsenapplikators aktiviert, insbesondere nur eine einzige Düsenreihe oder einzelne Düsen einer Düsenreihe. Dies ist hilfreich, um zum Beispiel den Beschichtungsabstand in einem idealen Toleranzfenster zu halten oder um das Beschichtungsmittel nahezu orthogonal auf die Bauteilfläche auftreffen zu lassen.

Falls der Düsenapplikator dagegen mit einer großen Flächenbeschichtungsleistung betrieben werden soll, so wird vorzugsweise mehr als eine Düsenreihe des Düsenapplikators aktiviert, insbesondere alle Düsenreihen.

Hierbei ist zu erwähnen, dass die Anzahl der aktivierten bzw. deaktivierten Düsenreihen des Düsenapplikators nicht zwischen einem Maximalwert und einem Minimalwert umgeschaltet werden muss. Es besteht im Rahmen der Erfindung vielmehr auch die Möglichkeit, dass die Düsenreihen jeweils einzeln zugeschaltet bzw. abgeschaltet werden, um die Flächenbeschichtungsleistung entsprechend zu erhöhen bzw. zu verringern und dadurch eine quasi kontinuierliche Anpassung der Flächenbeschichtungsleistung zu ermöglichen.

Gemäß der Erfindung erfolgt die flexible Anpassung der Ansteuerung des Düsenapplikators dadurch, dass der Düsenapplikator zwischen einem Strahlbetrieb und einem Tropfenbetrieb umgeschaltet wird.

In dem Strahlbetrieb gibt der Düsenapplikator einen Beschichtungsmittelstrahl ab, der in Längsrichtung des Beschichtungsmittelstrahls zusammenhängt, im Gegensatz zu einem Tröpfchenstrahl, der aus Tröpfchen besteht, die in Längsrichtung des Tröpfchenstrahls voneinander getrennt sind. Dazu sollte der Lackierabstand so gewählt werden, dass der Beschichtungsmittelstrahl nicht einem natürlichen Zerfall unterliegt.

In dem Tropfenbetrieb gibt der Düsenapplikator dagegen einen Tröpfchenstrahl aus, der aus Tröpfchen besteht, die in Längsrichtung des Tröpfchenstrahls voneinander getrennt sind, im Gegensatz zu dem Beschichtungsmittelstrahl, der in Längsrichtung des Beschichtungsmittelstrahls zusammenhängt.

Der Strahlbetrieb wird dann programmgesteuert gewählt, wenn eine Flächenbeschichtung mit einer hohen Flächenleistung gewünscht wird, beispielsweise zur Lackierung von großen Außenflächen eines Kraftfahrzeugkarosseriebauteils.

Der Tropfenbetrieb wird dagegen vorzugsweise programmgesteuert verwendet, wenn im Überlappungsbereich von Beschichtungsmittelbahnen oder am Bahnanfang oder am Bahnende beschichtet werden soll.

Darüber hinaus kann der Tropfenbetrieb vorteilhaft verwendet werden, wenn eine Detaillackierung erfolgen soll oder wenn Grafiken auf die Bauteiloberfläche aufgebracht werden sollen.

Allgemein besteht auch die Möglichkeit, dass bei der Beschichtung einer Bauteilfläche die Innenflächen der Bauteilfläche mit dem Strahlbetrieb beschichtet werden, während die Ränder der Bauteilfläche mit dem Tropfenbetrieb beschichtet werden.

Hierbei ist auch zu erwähnen, dass der Tröpfchenstrahl und der zusammenhängende Beschichtungsmittelstrahl gleichzeitig mit demselben Düsenapplikator abgegeben werden kann. Dies bedeutet, dass aus mindestens einer Düse ein Tröpfchenstrahl abgegeben wird, während gleichzeitig aus mindestens einer anderen Düse desselben Düsenapplikators ein zusammenhängender Beschichtungsmittelstrahl abgegeben wird.

Alternativ besteht die Möglichkeit, dass der Tröpfchenstrahl und der zusammenhängende Beschichtungsmittelstrahl abwechselnd mit demselben Düsenapplikator abgegeben werden. Dies bedeutet, dass der Düsenapplikator umgeschaltet wird zwischen dem Tropfenbetrieb und dem Strahlbetrieb und dann jeweils entweder nur im Tropfenbetrieb arbeitet oder im Strahlbetrieb.

Alternativ hierzu kann in einem Applikator mit mehreren Düsenplatten eine Düsenplatte im Strahlbetrieb und eine andere im Tropfenbetrieb betrieben werden.

Ferner besteht alternativ auch die Möglichkeit, dass mehrere Düsenapplikatoren eingesetzt werden, wobei ein erster Düsenapplikator im Tropfenbetrieb arbeitet, während ein zweiter Düsenapplikator im Strahlbetrieb arbeitet.

Im Rahmen der Erfindung besteht auch die Möglichkeit, dass zwei Düsenapplikatoren von jeweils einem Beschichtungsroboter über die Bauteiloberfläche des zu beschichtenden Bauteils geführt werden und die Bauteiloberfläche dann gemeinsam beschichten. Voraussetzung für eine solche Kooperation zwischen zwei Beschichtungsrobotern und den von diesen beiden Beschichtungsrobotern geführten Düsenapplikatoren ist jedoch eine sehr genaue Relativpositionierung der beiden Düsenapplikatoren. Dies ist insbesondere dann wichtig, wenn die beiden Düsenapplikatoren Beschichtungsmittelbahnen aufbringen, die aneinander anstoßen, da Fehlpositionierungen dann leicht sichtbar sind. So führt eine ungewünschte Überlappung der Beschichtungsmittelbahnen dann zu einer Überbeschichtung, d.h. zu einer zu großen Dicke der Beschichtung im Überlappungsbereich. Bei einem zu großen Abstand zwischen den Düsenapplikatoren können dagegen zwischen den aneinander angrenzenden Beschichtungsmittelbahnen Lücken auftreten, was ebenfalls störend sichtbar ist. Die beiden Düsenapplikatoren werden deshalb von den beiden Beschichtungsrobotern mit einer großen relativen Positionierungsgenauigkeit mit einer sehr geringen Positionierungstoleranz über die Bauteiloberfläche des zu beschichtenden Bauteils geführt. Diese relative Positionierungstoleranz ist vorzugsweise kleiner als 2mm, 1mm, 500µm, 200µm, 100µm oder sogar 50µm.

Diese geringere Positionierungstoleranz lässt sich jedoch in Lackieranlagen zur Lackierung von Kraftfahrzeugkarosseriebauteilen in der Regel nicht ohne weiteres realisieren. Zum einen haben die üblichen mehrachsigen Lackierroboter eine bestimmte bauartbedingte Positionierungstoleranz. Zum anderen werden die zu lackierenden Kraftfahrzeugkarosseriebauteile aber auch von einem Förderer durch die Lackieranlage gefördert, wobei auch der Förderer eine relativ große Positionierungstoleranz hat.

Die Erfindung sieht deshalb vorzugsweise ein optisches Vermessungssystem vor, um die räumliche Position des Beschichtungsobjekts und/oder der beiden Düsenapplikatoren zu ermitteln. Dadurch besteht im Rahmen der Erfindung die Möglichkeit, toleranzbedingte Positionierungsfehler nachzusteuern, so dass die gewünschte hohe relative Positionierungsgenauigkeit erreicht wird.

Beispielsweise kann ein solches optisches Vermessungssystem kamerabasiert sein und Marker an den Beschichtungsrobotern und/oder an den Düsenapplikatoren optisch erfassen.

Alternativ besteht jedoch auch die Möglichkeit, dass die Beschichtungsroboter Sensoren aufweisen, beispielsweise an den Roboterhandachsen oder an den Düsenapplikatoren selbst, um dadurch die Relativpositionierung der beiden Düsenapplikatoren zu erfassen, was wiederum eine entsprechende Nachsteuerung ermöglicht, damit die gewünschte hohe Positionierungsgenauigkeit erreicht wird.

Ein weiteres Problem besteht bei der Beschichtung stark gewölbter Bauteiloberflächen, wie beispielsweise bei Kraftfahrzeugkarosseriebauteilen. Dabei ändert sich nämlich der Applikationsabstand zwischen den Düsen des Düsenapplikators und der Bauteiloberfläche laufend. Darüber hinaus ist der Applikationsabstand der Düsen innerhalb des Düsenapplikators auch nicht einheitlich, so dass eine einheitliche Ansteuerung des Düsenapplikators aufgrund des unterschiedlichen Applikationsabstandes der einzelnen Düsen zu Problemen führen kann.

In einer Weiterbildung der Erfindung ist deshalb vorgesehen, dass bei der Beschichtung stark gewölbter Bauteiloberflächen nur ein erster Teil der Düsen aktiviert wird und zwar vorzugsweise ein relativ kleiner, zusammenhängender Teil der Düsen, damit innerhalb des aktivierten Teils der Düsen ein möglichst einheitlicher Applikationsabstand bei möglichst orthogonaler Ausrichtung der Beschichtungsmittelstrahlen herrscht.

Bei der Beschichtung von wenig gewölbten Bauteiloberflächen und insbesondere bei der Beschichtung von ebenen Bauteiloberflächen wird dagegen vorzugsweise ein größerer zweiter Teil der Düsen aktiviert, um eine möglichst große Flächenbeschichtungsleistung zu erreichen.

Neben dem vorstehend beschriebenen erfindungsgemäßen Beschichtungsverfahren umfasst die Erfindung auch eine entsprechende Beschichtungseinrichtung (z.B. Lackieranlage), wobei sich der Aufbau und die Funktionsweise dieser Beschichtungseinrichtung bereits aus der vorstehenden Beschreibung ergeben, so dass zur Vermeidung von Wiederholungen auf die vorstehende Beschreibung verwiesen wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine schematische Darstellung zur Erläuterung der Lackierung von stark gewölbten Bauteiloberflächen gemäß dem Stand der Technik,
- Figur 1B: eine erfindungsgemäße Abwandlung zur Lackierung von stark gewölbten Bauteiloberflächen, wobei ein Teil der Düsen des Düsenapplikators deaktiviert ist,
- Figur 2A: eine schematische Darstellung zur Verdeutlichung der Lackierung mit einer kleinen Flächenbeschichtungsleistung, wobei der Düsenapplikator in Längsrichtung der Bewegungsbahn ausgerichtet ist,
- Figur 2B: eine schematische Darstellung zur Lackierung mit einer großen Flächenbeschichtungsleistung, wobei der Düsenapplikator quer zu der Bewegungsbahn ausgerichtet ist,
- Figur 3A: eine schematische Darstellung eines Düsenapplikators, der zusammenhängende Beschichtungsmittelstrahlen abgibt,
- Figur 3B: eine schematische Darstellung eines Düsenapplikators, der Tröpfchenstrahlen abgibt,
- Figur 4: eine schematische Darstellung zur Flächenbeschichtung entlang einer mäanderförmigen Bewegungsbahn, wobei teilweise eine Tröpfchenapplikation und teilweise eine Strahlapplikation erfolgt,
- Figur 5: eine schematische Darstellung einer erfindungsgemäßen Lackiereinrichtung mit einem kamerabasierten Vermessungssystem,
- Figur 6: eine Abwandlung von Figur 5 mit Sensoren an den einzelnen Lackierrobotern zur Verbesserung der Relativpositionierung, sowie
- Figuren 7-9: Abwandlungen von Figur 4.

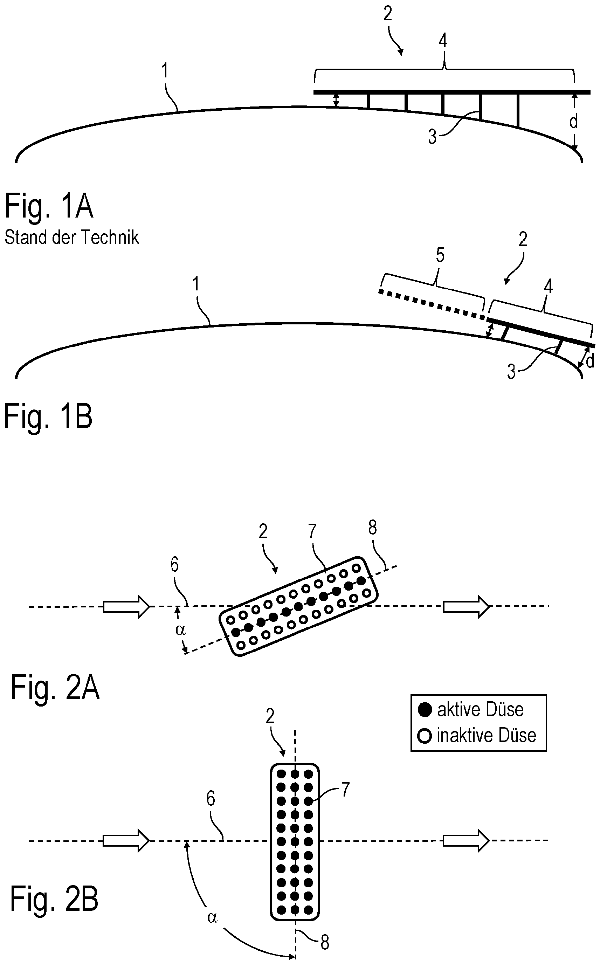

Im Folgenden wird nun zunächst die Zeichnung gemäß Figur 1A beschrieben, welche die herkömmliche Lackierung einer gekrümmten Bauteiloberfläche 1 eines Kraftfahrzeugkarosseriebauteils mittels eines Düsenapplikators 2 verdeutlicht.

Der Düsenapplikator weist hierbei zahlreiche Düsen auf, die jeweils einen Beschichtungsmittelstrahl abgeben, wobei der Düsenapplikator 2 einen aktiven Teil 4 aufweist, innerhalb dessen alle Düsen des Düsenapplikators 2 aktiv sind und die Beschichtungsmittelstrahlen 3 abgeben. Der aktive Teil 4 des Düsenapplikators 2 umfasst herkömmlicherweise sämtliche Düsen des Düsenapplikators 2, d.h. alle Düsen des Düsenapplikators 2 geben einen Beschichtungsmittelstrahl 3 ab, was auch bei der Beschichtung von stark gekrümmten Bauteiloberflächen gilt. Dies hat jedoch zur Folge, dass der durch die Doppelpfeile angedeutete Applikationsabstand d innerhalb des Düsenapplikators 2 sehr uneinheitlich ist. So ist der Applikationsabstand d bei der in der Zeichnung linken Düse des Düsenapplikators 2 sehr klein, während der Applikationsabstand d bei der in der Zeichnung rechten Düse sehr groß ist. Diese Uneinheitlichkeit des Applikationsabstandes d innerhalb des Düsenapplikators 2 kann jedoch zu einer entsprechenden Inhomogenität der Beschichtung auf der Bauteiloberfläche 1 führen.

Dieses Problem wird durch die erfindungsgemäße Lösung gelöst, die in Figur 1B dargestellt ist. So zeigt die Zeichnung hierbei einen Zustand bei der Lackierung eines stark gekrümmten Bereichs der Bauteiloberfläche 1. Der aktive Teil 4 des Düsenapplikators 2 umfasst dann nur einen Teil der Düsen, während die Düsen in einem inaktiven Teil 5 des Düsenapplikators 2 deaktiviert sind. Innerhalb des aktiven Teils 4 des Düsenapplikators 2 ist der Applikationsabstand d jedoch relativ einheitlich, wie durch die Doppelpfeile angedeutet ist, die innerhalb des aktiven Teils 4 des Düsenapplikators 2 eine relativ einheitliche Länge haben. Dadurch werden Inhomogenitäten der Beschichtung auf der Bauteiloberfläche 1 vermieden, die durch eine starke Bauteilkrümmung verursacht werden, wie es beim Stand der Technik der Fall ist.

Die Figuren 2A und 2B zeigen eine Weiterbildung, die teilweise mit dem vorstehend beschriebenen Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Hierbei ist zunächst zu erwähnen, dass der Düsenapplikator 2 von einem mehrachsigen Lackierroboter mit einer seriellen Roboterkinematik entlang einer programmierten ("geteachten") Bewegungsbahn 6 über die Bauteiloberfläche geführt wird, wobei die Zeichnung nur einen kleinen Ausschnitt der Bewegungsbahn 6 zeigt, um das Prinzip der Erfindung zu verdeutlichen.

Weiterhin ist zu erwähnen, dass der Düsenapplikator mehrere parallele Düsenreihen aufweist mit jeweils mehreren Düsen 7, die wahlweise inaktiv oder aktiv geschaltet werden. Die aktiven Düsen sind hierbei als ausgefüllte Kreise dargestellt, während die inaktiven Düsen als Kreisringe gezeichnet sind.

Weiterhin ist zu erwähnen, dass die Düsen 7 hierbei jeweils in einer von drei Düsenreihen 8 nebeneinander angeordnet sind.

Der mehrachsige Lackierroboter dreht den Düsenapplikator 2 nun während der Bewegung entlang der Bewegungsbahn 6 in Abhängigkeit von der gewünschten Flächenbeschichtungsleistung.

Figur 2A zeigt die Drehung des Düsenapplikators 2 zur Lackierung mit einer geringen Flächenbeschichtungsleistung. In dieser Betriebsart ist der Düsenapplikator 2 mit der Düsenreihe 8 parallel zu der Bewegungsbahn 6 ausgerichtet, wobei von den drei Düsenreihen nur eine einzige Düsenreihe aktiv ist und Beschichtungsmittelstrahlen abgibt. Der Düsenapplikator 2 arbeitet dann zwar mit einer relativ geringen Flächenbeschichtungsleistung aber randscharf und weitgehend stufenfrei.

Der Düsenapplikator muss aber nicht zwangsläufig parallel zur Bewegungsbahn ausgerichtet sein. Vielmehr kann er in einer bevorzugten Variante jeden beliebigen Winkel α insbesondere α<60°, α<45° oder α<20° zur Bewegungsbahn gedreht sein.

Figur 2B zeigt dagegen die Drehung des Düsenapplikators 2 zur Erreichung einer großen Flächenbeschichtungsleistung. Der mehrachsige Lackierroboter dreht den Düsenapplikator 2 dann mit den Düsenreihen 8 mit einem Winkel α>60°, α>75° oder rechtwinklig (α=90°) zu der Bewegungsbahn 6. Dies hat zur Folge, dass der Düsenapplikator 2 pro Zeiteinheit eine relativ große Bauteiloberfläche überstreicht. In dieser Betriebsart sind dann auch alle Düsenreihen 8 des Düsenapplikators 2 aktiv, d.h. sämtliche Düsen 7 in allen drei Düsenreihen 8 geben jeweils einen Beschichtungsmittelstrahl ab, um eine ausreichende Beschichtungsdicke und eine hohe Flächenbeschichtungsleistung zu erreichen. Diese Betriebsart kann beispielsweise gewählt werden, um große Außenflächen von Kraftfahrzeugkarosseriebauteilen zu lackieren.

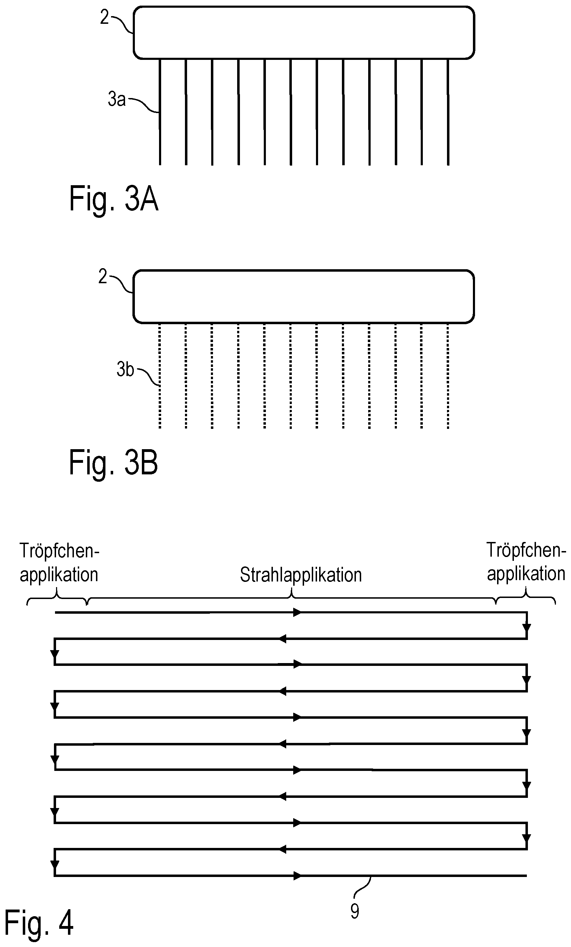

Figur 3A zeigt eine weitere Abwandlung, die wieder teilweise mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Hierbei gibt der Düsenapplikator 2 zusammenhängende Beschichtungsmittelstrahlen 3a ab, die in Längsrichtung des Beschichtungsmittelstrahls 3a zusammenhängen. Diese Betriebsart kann beispielsweise sinnvoll sein, um große Außenflächen mit einer hohen Flächenbeschichtungsleistung zu lackieren.

Figur 3B zeigt dagegen eine andere mögliche Betriebsart, in der die einzelnen Düsen des Düsenapplikators 2 jeweils einen Tröpfchenstrahl 3b abgeben, der aus zahlreichen Tröpfchen besteht, die in Längsrichtung des Tröpfchenstrahls 3d voneinander beabstandet sind. Diese Betriebsart kann beispielsweise im Überlappungsbereich von angrenzenden Beschichtungsmittelbahnen oder am Bahnanfang oder am Bahnende einer Beschichtungsmittelbahn sinnvoll sein oder zur Detaillackierung, um nur einige Beispiele zu nennen.

Hierbei ist zu erwähnen, dass der Düsenapplikator 2 von der Betriebsart gemäß Figur 3A (zusammenhängender Beschichtungsmittelstrahl 3a) und der Betriebsart gemäß Figur 3B (Tröpfchenstrahl 3b) umschaltbar ist.

Figur 4 zeigt eine schematische Darstellung einer mäanderförmigen Bewegungsbahn 9, wobei der Düsenapplikator von einem mehrachsigen Lackierroboterprogramm gesteuert entlang der mäanderförmigen Bewegungsbahn 9 über die Bauteiloberfläche geführt wird.

Hierbei kann es sinnvoll sein, wenn der Düsenapplikator 2 im Bereich der Wendepunkte jeweils die Tröpfchenstrahlen 3b appliziert, wohingegen der Düsenapplikator 2 zwischen den Wendepunkten jeweils die zusammenhängenden Beschichtungsmittelstrahlen 3a appliziert.

Dabei kann sich die Ziehgeschwindigkeit des Düsenapplikators 2 bei der Applikation der Tröpfchenstrahlen 3b von der Geschwindigkeit bei der Applikation von zusammenhängenden Beschichtungsmittelstrahlen 3a unterscheiden, insbesondere geringer sein.

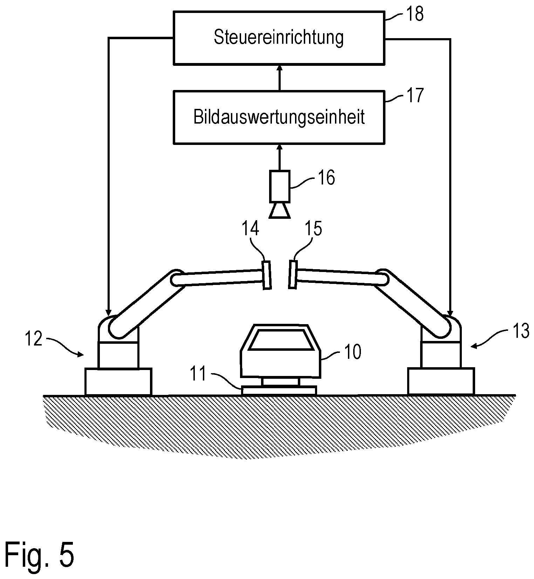

Figur 5 zeigt eine schematische, stark vereinfachte Darstellung einer erfindungsgemäßen Lackieranlage zur Lackierung von Kraftfahrzeugkarosseriebauteilen 10, die von einem Förderer 11 entlang einer Lackierstraße rechtwinklig zur Zeichenebene gefördert werden.

Die Lackierung erfolgt hierbei durch zwei Lackierroboter 12, 13 mit einer seriellen Roboterkinematik und mehr als sechs beweglichen Roboterhandachsen, wobei die Lackierroboter 12, 13 hier nur schematisch dargestellt sind.

Die Lackierroboter 12, 13 führen jeweils einen Düsenapplikator 14, 15, wobei die Düsenapplikatoren 14, 15 bei der Lackierung zusammenwirken, was eine sehr große relative Positionierungsgenauigkeit bei der Positionierung der Düsenapplikatoren 14, 15 erfordert. Die erforderliche relative Positionierungsgenauigkeit kann jedoch nicht ohne weiteres erreicht werden, da sowohl die Lackierroboter 12, 13 als auch der Förderer 11 jeweils relativ grobe Positionierungstoleranzen haben.

In diesem Ausführungsbeispiel ist deshalb ein kamerabasiertes Vermessungssystem vorgesehen, um die tatsächliche Relativpositionierung der Düsenapplikatoren 14, 15 und/oder des Kraftfahrzeugkarosseriebauteils 10 zu messen und dadurch die Positionierung nachsteuern zu können, damit die erforderlichen Positionierungstoleranzen von weniger als ±200µm eingehalten werden.

Das kamerabasierte Vermessungssystem weist eine Kamera 16 auf, welche ein Bild der Düsenapplikatoren 14, 15 und der Bauteiloberfläche aufnimmt und an eine Bildauswertungseinheit 17 weiterleitet.

Die Bildauswertungseinheit 17 ermittelt dann durch eine Bildauswertung die Relativpositionierung der beiden Düsenapplikatoren 14, 15 und steuert ggf. eine Steuereinrichtung 18 so an, dass die Lackierroboter 12, 13 nachgesteuert werden, damit die gewünschte Relativpositionierung der Düsenapplikatoren 14, 15 mit der erforderlichen großen Positionierungsgenauigkeit erreicht wird. Hierbei kann auch die absolute Position der Kraftfahrzeugkarosseriebauteile 10 ermittelt werden.

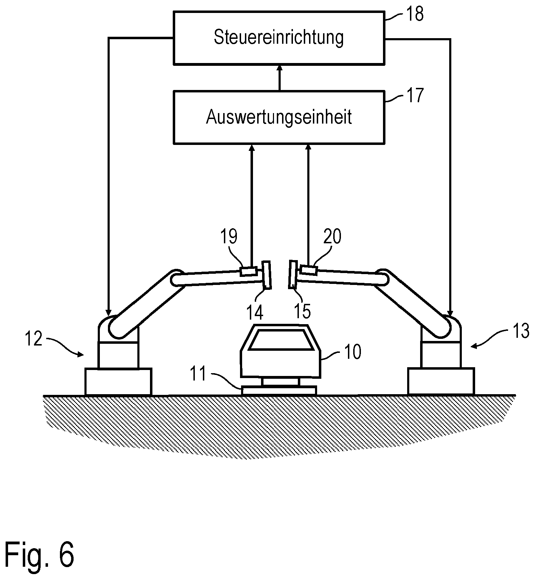

Figur 6 zeigt eine Abwandlung von Figur 5, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass im Gegensatz zu dem Ausführungsbeispiel gemäß Figur 5 kein kamerabasiertes optisches Vermessungssystem vorgesehen ist. Vielmehr sind an den Roboterhandachsen der beiden Lackierroboter 12, 13 Sensoren 19, 20 angebracht, welche die Relativpositionierung der beiden Düsenapplikatoren 14, 15 erfassen und an die Bildauswertungseinheit 17 weiter leiten.

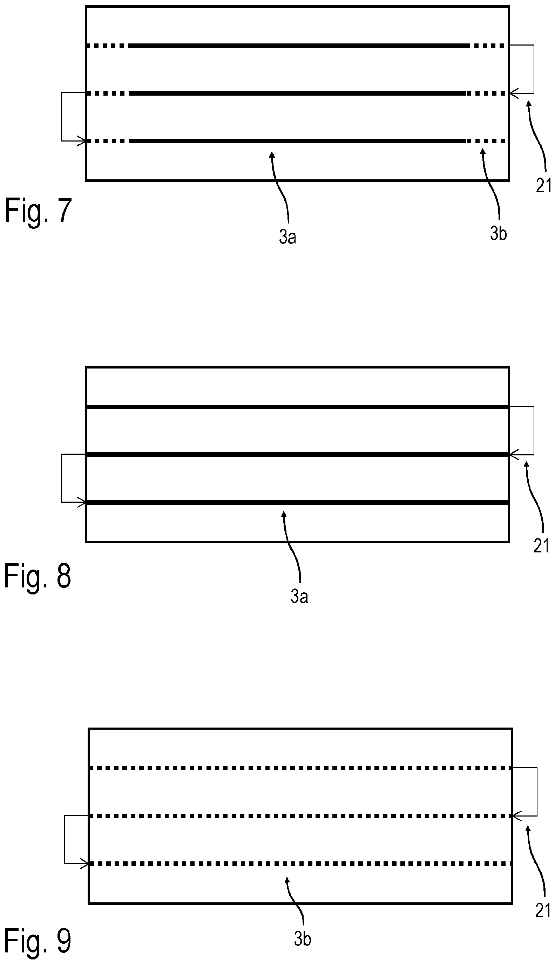

Die Figuren 7-9 zeigen eine Abwandlungen von Figur 4, so dass zur Vermeidung von Wiederholungen auf die vorstehende Beschreibung zu Figur 4 verwiesen wird, wobei für entsprechende Einzelheiten dieselben Bezugszeichen verwendet werden.

Eine Besonderheit des Ausführungsbeispiels gemäß Figur 4 besteht darin, dass die Beschichtungsmittelstrahlen 3b außerhalb der zu beschichtenden Bauteiloberfläche an Wendepunkten 21 kurz abgeschaltet werden, d.h. nicht auf der zu beschichtenden Bauteiloberfläche.

Innerhalb der zu beschichtenden Bauteiloberfläche wird hierbei mit den zusammenhängenden Beschichtungsmittelstrahlen 3a lackiert, wohingegen an den Rändern der zu beschichtenden Bauteiloberfläche mit dem Tröpfchenstrahl 3a lackiert wird.

Das Ausführungsbeispiel gemäß Figur 8 unterscheidet sich davon dadurch, dass durchgehend mit dem zusammenhängenden Beschichtungsmittelstrahl 3a lackiert wird.

Bei dem Ausführungsbeispiel gemäß Figur 9 wird dagegen durchgehend mit dem Tröpfchenstrahl 3a lackiert.

### Bezugszeichenliste

- 1: Bauteiloberfläche
- 2: Düsenapplikator
- 3: Beschichtungsmittelstrahl
- 3a: Beschichtungsmittelstrahl
- 3b: Tröpfchenstrahl
- 4: Aktiver Teil des Düsenapplikators
- 5: Inaktiver Teil des Düsenapplikators
- 6: Programmierte Bewegungsbahn
- 7: Düsen
- 8: Düsenreihen
- 9: Mäanderförmige Bewegungsbahn
- 10: Kraftfahrzeugkarosseriebauteilen
- 11: Förderer
- 12: Lackierroboter
- 13: Lackierroboter
- 14: Düsenapplikator
- 15: Düsenapplikator
- 16: Kamera
- 17: Bildauswertungseinheit
- 18: Steuereinrichtung
- 19: Sensor
- 20: Sensor
- 21: Wendepunkt
- d: Applikationsabstand

## Patentansprüche

1. Beschichtungsverfahren zur Beschichtung von Bauteilen (10) mit einem Düsenapplikator (2; 14, 15) mit mehreren Düsen (7), insbesondere zur Applikation eines Lacks, eines Klebstoffs, eines Dämmstoffs, eines Dichtstoffs oder eines Primers, **dadurch gekennzeichnet, dass** der Düsenapplikator (2; 14, 15) wahlweise betrieben wird
a) mit einer großen Flächenbeschichtungsleistung, insbesondere zur Flächenbeschichtung, wobei der Düsenapplikator (2; 14, 15) zur Beschichtung mit der großen Flächenbeschichtungsleistung in einem Strahlbetrieb arbeitet mit einem in Längsrichtung zusammenhängenden Beschichtungsmittelstrahl (3a) im Gegensatz zu einem Tröpfchenstrahl (3b), der aus Tröpfchen besteht, die in Längsrichtung des Tröpfchenstrahls (3b) voneinander getrennt sind, oder
b) mit einer kleinen Flächenbeschichtungsleistung, insbesondere zur Detailbeschichtung, wobei der Düsenapplikator (2; 14, 15) zur Beschichtung mit der kleinen Flächenbeschichtungsleistung in einem Tropfenbetrieb arbeitet mit einem Tröpfchenstrahl (3b), der aus Tröpfchen besteht, die in Längsrichtung des Tröpfchenstrahls (3b) voneinander getrennt sind, im Gegensatz zu dem Beschichtungsmittelstrahl (3a), der in Längsrichtung des Beschichtungsmittelstrahls (3a) zusammenhängt.

2. Beschichtungsverfahren nach Anspruch 1,
**dadurch gekennzeichnet,**
a) **dass** die Düsen (7) in dem Düsenapplikator (2; 14, 15) in einer Düsenreihe (8) nebeneinander angeordnet sind,
b) **dass** der Düsenapplikator (2; 14, 15) entlang einer vorgegebenen Bewegungsbahn (6) über die Oberfläche des zu beschichtenden Bauteils (10) bewegt wird,
c) **dass** der Düsenapplikator (2; 14, 15) zur Beschichtung mit der großen Flächenbeschichtungsleistung so gedreht wird, dass die Düsenreihe (8) quer, insbesondere mit einem Winkel (α) größer als 60°, größer als 75° oder rechtwinklig, zu der Bewegungsbahn (6) ausgerichtet ist, und
d) **dass** der Düsenapplikator (2; 14, 15) zur Beschichtung mit der kleinen Flächenbeschichtungsleistung so gedreht wird, dass die Düsenreihe (8) längs, insbesondere parallel oder in einem Winkel (α) kleiner als 60°, kleiner als 45° oder sogar kleiner als 20° zu der Bewegungsbahn (6) ausgerichtet ist, und/oder
e) **dass** der Düsenapplikator (2; 14, 15) während der Bewegung entlang der vorgegebenen Bewegungsbahn (6) gedreht wird.

3. Beschichtungsverfahren nach Anspruch 2,
**dadurch gekennzeichnet,**
a) **dass** der Düsenapplikator (2; 14, 15) mehrere parallele Düsenreihen (8) aufweist, in denen jeweils mehrere Düsen (7) nebeneinander angeordnet sind,
b) **dass** bei der Beschichtung mit der kleinen Flächenbeschichtungsleistung nicht alle Düsenreihen (8) des Düsenapplikators (2; 14, 15) aktiviert werden, insbesondere nur eine einzige Düsenreihe (8) oder ein Teil einer Düsenreihe, und
c) **dass** bei der Beschichtung mit der großen Flächenbeschichtungsleistung mehr als eine einzige Düsenreihe (8) des Düsenapplikators (2; 14, 15) aktiviert wird, insbesondere alle Düsenreihen (8).

4. Beschichtungsverfahren nach einem der vorhergehenden Ansprüche, **dadurch gekennzeichnet,**
a) **dass** ein erster Düsenapplikator (14) von einem ersten Beschichtungsroboter (12) über die Bauteiloberfläche des zu beschichtenden Bauteils (10) geführt wird,
b) **dass** ein zweiter Düsenapplikator (15) von einem zweiten Beschichtungsroboter (13) über die Bauteiloberfläche des zu beschichtenden Bauteils (10) geführt wird, und
c) **dass** die beiden Düsenapplikatoren (14, 15) von den beiden Beschichtungsrobotern (12, 13) mit einer großen relativen Positionierungsgenauigkeit mit einer Positionierungstoleranz von weniger als 2mm, 1mm, 500µm, 200µm, 100µm oder 50µm über der Bauteiloberfläche des zu beschichtenden Bauteils (10) positioniert werden.

5. Beschichtungsverfahren nach Anspruch 4,
**dadurch gekennzeichnet,**
a) **dass** die räumliche Position der beiden Düsenapplikatoren (14, 15) und/oder des Beschichtungsobjekts mittels eines optischen Vermessungssystems (16, 17) vermessen wird, insbesondere mittels eines kamerabasierten Vermessungssystems (16, 17) mit Markern an den Beschichtungsrobotern (12, 13), um die große relative Positionierungsgenauigkeit zu erreichen, und/oder
b) **dass** die Beschichtungsroboter (12, 13) Sensoren (19, 20) aufweisen, insbesondere an Roboterhandachsen, um ihre Relativposition zu erfassen und dadurch die große relative Positionierungsgenauigkeit zu ermöglichen.

6. Beschichtungsverfahren nach einem der vorhergehenden Ansprüche, **dadurch gekennzeichnet,**
a) **dass** bei der Beschichtung stark gewölbter Bauteiloberflächen nur ein erster Teil (4) der Düsen (7) aktiviert wird, während einer zweiter Teil (5) der Düsen (7) inaktiv ist, und
b) **dass** bei der Beschichtung von wenig gewölbten Bauteiloberflächen, insbesondere von ebenen Bauteiloberflächen, auch der zweite Teil (5) der Düsen (7) aktiviert wird.

7. Beschichtungseinrichtung zur Beschichtung von Bauteilen (10) mit einem Beschichtungsmittel, insbesondere zur Applikation eines Lacks, eines Klebstoffs, eines Dämmstoffs, eines Dichtstoffs oder eines Primers, mit
a) einem Düsenapplikator (2; 14, 15) mit mehreren Düsen (7) zur Applikation des Beschichtungsmittels auf die zu beschichtenden Bauteile (10),
b) einem mehrachsigen Beschichtungsroboter (12, 13), der den Düsenapplikator (2; 14, 15) entlang einer vorgegebenen Bewegungsbahn (6) über die Oberfläche der zu beschichtenden Bauteile (10) führt, und
c) einer Steuereinrichtung (18), die den Düsenapplikator (2; 14, 15) und den Beschichtungsroboter (12, 13) ansteuert,
**dadurch gekennzeichnet, dass** die Steuereinrichtung (18) den Düsenapplikator (2; 14, 15) wahlweise betreibt
d) mit einer großen Flächenbeschichtungsleistung, insbesondere zur Flächenbeschichtung, wobei der Düsenapplikator (2; 14, 15) zur Beschichtung mit der großen Flächenbeschichtungsleistung in einem Strahlbetrieb arbeitet, mit einem in Längsrichtung zusammenhängenden Beschichtungsmittelstrahl (3a) im Gegensatz zu einem Tröpfchenstrahl (3b), der aus Tröpfchen besteht, die in Längsrichtung des Tröpfchenstrahls (3b) voneinander getrennt sind, oder
e) mit einer kleinen Flächenbeschichtungsleistung, insbesondere zur Detailbeschichtung, wobei der Düsenapplikator (2; 14, 15) zur Beschichtung mit der kleinen Flächenbeschichtungsleistung in einem Tropfenbetrieb arbeitet, mit einem Tröpfchenstrahl (3b), der aus Tröpfchen besteht, die in Längsrichtung des Tröpfchenstrahls (3b) voneinander getrennt sind, im Gegensatz zu dem Beschichtungsmittelstrahl (3a), der in Längsrichtung des Beschichtungsmittelstrahls (3a) zusammenhängt.

8. Beschichtungseinrichtung nach Anspruch 7, **dadurch gekennzeichnet,**
a) **dass** die Düsen (7) in dem Düsenapplikator (2; 14, 15) in einer Düsenreihe (8) nebeneinander angeordnet sind,
b) **dass** die Steuereinrichtung (18) den Beschichtungsroboter so ansteuert, dass der Düsenapplikator (2; 14, 15) gedreht wird,
c) **dass** der Düsenapplikator (2; 14, 15) zur Beschichtung mit der großen Flächenbeschichtungsleistung von dem Beschichtungsroboter so gedreht wird, dass die Düsenreihe (8) quer, insbesondere mit einem Winkel (α) größer als 60°, größer als 75° oder rechtwinklig, zu der Bewegungsbahn (6) ausgerichtet ist, und
d) **dass** der Düsenapplikator (2; 14, 15) zur Beschichtung mit der kleinen Flächenbeschichtungsleistung von dem Beschichtungsroboter so gedreht wird, dass die Düsenreihe (8) längs, insbesondere parallel oder in einem Winkel (α) kleiner als 60°, kleiner als 45° oder sogar kleiner 20°, zu der Bewegungsbahn (6) ausgerichtet ist, und/oder
e) **dass** der Düsenapplikator (2; 14, 15) während der Bewegung entlang der vorgegebenen Bewegungsbahn (6) gedreht wird.

9. Beschichtungseinrichtung nach Anspruch 8,
**dadurch gekennzeichnet,**
a) **dass** der Düsenapplikator (2; 14, 15) mehrere parallele Düsenreihen (8) aufweist, in denen jeweils mehrere Düsen (7) nebeneinander angeordnet sind,
b) **dass** die Steuereinrichtung (18) den Düsenapplikator (2; 14, 15) so ansteuert, dass bei der Beschichtung mit der kleinen Flächenbeschichtungsleistung nicht alle Düsenreihen (8) des Düsenapplikators (2; 14, 15) aktiviert werden, insbesondere nur eine einzige Düsenreihe oder ein Teil einer Düsenreihe, und
c) **dass** die Steuereinrichtung (18) den Düsenapplikator (2; 14, 15) so ansteuert, dass bei der Beschichtung mit der großen Flächenbeschichtungsleistung mehr als eine Düsenreihe (8) des Düsenapplikators (2; 14, 15) aktiviert wird, insbesondere alle Düsenreihen (8).

10. Beschichtungseinrichtung nach einem der Ansprüche 8 bis 9, **dadurch gekennzeichnet,**
a) **dass** ein erster Düsenapplikator (14) von einem ersten Beschichtungsroboter (12) über die Bauteiloberfläche (1) des zu beschichtenden Bauteils (10) geführt wird,
b) **dass** ein zweiter Düsenapplikator (15) von einem zweiten Beschichtungsroboter (13) über die Bauteiloberfläche (1) des zu beschichtenden Bauteils (10) geführt wird, und
c) **dass** die beiden Düsenapplikatoren (14, 15) von den beiden Beschichtungsrobotern (12, 13) mit einer großen relativen Positionierungsgenauigkeit mit einer Positionierungstoleranz von weniger als 2mm, 1mm, 500µm, 200µm, 100µm oder 50µm über der Bauteiloberfläche (1) des zu beschichtenden Bauteils (10) positioniert wird.

11. Beschichtungseinrichtung nach Anspruch 10,
**dadurch gekennzeichnet,**
a) **dass** die räumliche Position der beiden Düsenapplikators (2; 14, 15) mittels eines optischen Vermessungssystems (16, 17) vermessen wird, insbesondere mittels eines kamerabasierten Vermessungssystems (16, 17) mit Markern an den Beschichtungsrobotern (12, 13), um die großen relative Positionierungsgenauigkeit zu erreichen, und/oder
b) **dass** die Beschichtungsroboter (12, 13) Sensoren (19, 20) aufweisen, insbesondere an Roboterhandachsen, um ihre Relativposition zu erfassen und dadurch die große relative Positionierungsgenauigkeit zu ermöglichen.

12. Beschichtungseinrichtung nach einem der Ansprüche 7 bis 11, **dadurch gekennzeichnet,**
a) **dass** der Düsenapplikator (2; 14, 15) ein Druckkopf ist, und/oder
b) **dass** der Düsenapplikator (2; 14, 15) einen eng begrenzten Beschichtungsmittelstrahl (3a, 3b) abgibt im Gegensatz zu einem Sprühnebel, und/oder
c) **dass** der Düsenapplikator (2; 14, 15) einen Auftragswirkungsgrad von mindestens 80%, 90%, 95% oder 99% aufweist, so dass im Wesentlichen das gesamte applizierte Beschichtungsmittel vollständig auf dem Bauteil (10) abgelagert wird, ohne dass Overspray entsteht, und/oder
d) **dass** der Düsenapplikator (2; 14, 15) eine Flächenbeschichtungsleistung von mindestens 0,5 m²/min, 1m²/min, 2m²/min oder mindestens 3m²/min aufweist, und/oder
e) **dass** der Volumenstrom des applizierten Beschichtungsmittels und damit die Austrittsgeschwindigkeit des Beschichtungsmittels so eingestellt wird, dass das Beschichtungsmittel nach dem Auftreffen auf das Bauteil (10) nicht von dem Bauteil (10) abprallt, und/oder
f) **dass** die Austrittsgeschwindigkeit des Beschichtungsmittels aus dem Druckkopf mindestens 5 m/s, 7 m/s oder 10 m/s beträgt, und/oder
g) **dass** die Austrittsgeschwindigkeit des Beschichtungsmittels aus dem Druckkopf höchstens 30 m/s, 20 m/s oder 10 m/s beträgt, und/oder
h) **dass** der Applikationsabstand (d) zwischen Düse (7) und Bauteiloberfläche mindestens 4mm, 10 mm, 20mm oder 40 mm und/oder beträgt, und/oder
i) **dass** der Applikationsabstand (d) zwischen Düse (7) und Bauteiloberfläche höchstens 200mm oder 100 mm beträgt, und/oder
j) **dass** das Beschichtungsmittel ein Lack ist, insbesondere ein Basislack, ein Klarlack, ein Effektlack, ein Mica-Lack oder ein Metallic-Lack, und/oder
k) **dass** das Beschichtungsmittel ein Wasserlack oder ein Lösemittellack ist, und/oder
l) **dass** der Düsenapplikator (2; 14, 15) mindestens einen elektrisch ansteuerbaren Aktor aufweist, um Tropfen des Beschichtungsmittels aus dem Düsenapplikator (2; 14, 15) auszustoßen, insbesondere einen Magnetaktor oder einen Piezoaktor.

## Claims

1. Coating method for coating components (10) with a nozzle applicator (2; 14, 15) having a plurality of nozzles (7), in particular for applying a paint, an adhesive, an insulating agent, a sealing agent or a primer, **characterized in that** the nozzle applicator (2; 14, 15) is selectively operated
a) with a large area coating performance, in particular for area coating, wherein the nozzle applicator (2; 14, 15) operates in a jet mode for coating with the large area coating performance, with a coating agent jet (3a) which is connected in the longitudinal direction of the coating agent jet (3a), in contrast to a droplet jet (3b) which consists of droplets which are separated from one another in the longitudinal direction of the droplet jet (3b), or
b) with a small area coating performance, especially for detail coating, wherein the nozzle applicator (2; 14, 15) operates in a droplet mode for coating with the small area coating performance, with a droplet jet (3b), which consists of droplets which are separated from one another in the longitudinal direction of the droplet jet (3b), in contrast to the coating agent jet (3a), which is connected in the longitudinal direction of the coating agent jet (3a).

2. Coating method according to claim 1, **characterized in**
a) **that** the nozzles (7) in the nozzle applicator (2; 14, 15) are arranged next to one another in a nozzle row (8),
b) **that** the nozzle applicator (2; 14, 15) is moved along a predetermined movement path (6) over the surface of the component (10) to be coated,
c) **that** the nozzle applicator (2; 14, 15) is rotated for coating with the high are coating performance in such a way that the nozzle row (8) is aligned transversely, in particular at an angle (α) greater than 60°, greater than 75° or at right angles to the movement path (6), and
d) **that** the nozzle applicator (2; 14, 15) for coating with the small area coating performance is rotated in such a way that the nozzle row (8) is aligned longitudinally, in particular parallel or at an angle (α) of less than 60°, less than 45° or even less than 20° to the movement path (6), and/or
e) **that** the nozzle applicator (2; 14, 15) is rotated along the predetermined movement path (6) during the movement.

3. Coating method according to claim 2, **characterized in**
a) **that** the nozzle applicator (2; 14, 15) has a plurality of parallel nozzle rows (8) in each of which a plurality of nozzles (7) are arranged next to one another,
b) **that** during the coating with the small area coating performance not all nozzle rows (8) of the nozzle applicator (2; 14, 15) are activated, in particular only a single nozzle row (8) or a part of a nozzle row, and
c) **that** more than one single nozzle row (8) of the nozzle applicator (2; 14, 15), in particular all nozzle rows (8), is activated during the coating with the high area coating performance.

4. Coating method in accordance with one of the preceding claims, **characterized in**
a) **that** a first nozzle applicator (14) is guided by a first coating robot (12) over the component surface of the component (10) to be coated,
b) **that** a second nozzle applicator (15) is guided by a second coating robot (13) over the component surface of the component (10) to be coated, and
c) **that** the two nozzle applicators (14, 15) are positioned by the coating robots (12, 13) with a large relative positioning accuracy with a positioning tolerance of less than 2mm, 1mm, 500µm, 200µm, 100µm or 50µm above the component surface of the component (10) to be coated by the coating robots (12, 13).

5. Coating method according to claim 4, **characterized in**
a) **that** the spatial position of the two nozzle applicators (14, 15) and/or of the coating object is measured by means of an optical measurement system (16, 17), in particular by means of a camera-based measuring system (16, 17) with markers on the coating robots (12, 13), in order to achieve the high relative positional accuracy, and/or
b) **that** the coating robots (12, 13) have sensors (19, 20), in particular on robot hand axes, in order to detect their relative position and thereby enable the high relative positioning accuracy.

6. Coating method according to one of the preceding claims, **characterized in**
a) **that** only a first part (4) of the nozzles (7) is activated during the coating of heavily curved component surfaces, while a second part (5) of the nozzles (7) is inactive, and
b) **that** the second part (5) of the nozzles (7) is also activated during the coating of slightly curved component surfaces, in particular flat component surfaces.

7. Coating device for coating components (10) with a coating agent, in particular for applying a paint, an adhesive, an insulating agent, a sealing agent or a primer, having
a) a nozzle applicator (2; 14, 15) having a plurality of nozzles (7) for applying the coating agent to the components (10) to be coated,
b) a multi-axis coating robot (12, 13) which guides the nozzle applicator (2; 14, 15) along a predetermined movement path (6) over the surface of the components (10) to be coated, and
c) a control device (18) which controls the nozzle applicator (2; 14, 15) and the coating robot (12, 13),
**characterized in that** the control device (18) selectively operates the nozzle applicator (2; 14, 15)
d) with a large area coating performance, in particular for area coating, wherein the nozzle applicator (2; 14, 15) operates in a jet mode for coating with the large area coating performance, with a coating agent jet (3a) which is connected in the longitudinal direction of the coating agent jet (3a), in contrast to a droplet jet (3b) which consists of droplets which are separated from one another in the longitudinal direction of the droplet jet (3b), or
e) with a small area coating performance, especially for detail coating, wherein the nozzle applicator (2; 14, 15) operates in a droplet mode for coating with the small area coating performance, with a droplet jet (3b), which consists of droplets which are separated from one another in the longitudinal direction of the droplet jet (3b), in contrast to the coating agent jet (3a), which is connected in the longitudinal direction of the coating agent jet (3a).

8. Coating device according to claim 7, **characterized in**
a) **that** the nozzles (7) in the nozzle applicator (2; 14, 15) are arranged next to one another in a nozzle row (8),
b) **that** the control device (18) controls the coating robot in such a way that the nozzle applicator (2; 14, 15) is rotated,
c) **that** the nozzle applicator (2; 14, 15) is rotated by the coating robot for coating with the high area coating performance in such a way that the nozzle row (8) is aligned transversely, in particular at an angle (α) greater than 60°, greater than 75° or at right angles to the movement path (6), and
d) **that** the nozzle applicator (2; 14, 15) is rotated by the coating robot for coating with the small area coating performance in such a way that the nozzle row (8) is aligned longitudinally, in particular parallel or at an angle (α) of less than 60°, less than 45° or even less than 20° to the movement path (6), and/or
e) **that** the nozzle applicator (2; 14, 15) is rotated along the predetermined movement path (6) during the movement.

9. Coating device according to claim 8, **characterized in**
a) **that** the nozzle applicator (2; 14, 15) has a plurality of parallel nozzle rows (8) in each of which a plurality of nozzles (7) are arranged next to one another,
b) **that** the control device (18) controls the nozzle applicator (2; 14, 15) in such a way that, during the coating with the small area coating performance, not all nozzle rows (8) of the nozzle applicator (2; 14, 15) are activated, in particular only a single nozzle row or a part of a nozzle row, and
c) **that** the control device (18) controls the nozzle applicator (2; 14, 15) in such a way that more than one nozzle row (8) of the nozzle applicator (2; 14, 15), in particular all nozzle rows (8), is activated during the coating with the large area coating performance.

10. Coating device according to any of claims 8 to 9, **characterized in**
a) **that** a first nozzle applicator (14) is guided by a first coating robot (12) over the component surface of the component (10) to be coated,
b) **that** a second nozzle applicator (15) is guided by a second coating robot (13) over the component surface of the component (10) to be coated, and
c) **that** the two nozzle applicators (14, 15) are positioned by the coating robots (12, 13) with a large relative positioning accuracy with a positioning tolerance of less than 2mm, 1mm, 500µm, 200µm, 100µm or 50µm above the component surface of the component (10) to be coated by the coating robots (12, 13).

11. Coating device according to claim 10, **characterized in**
a) **that** the spatial position of the two nozzle applicators (2; 14, 15) is measured by means of an optical measurement system (16, 17), in particular by means of a camera-based measuring system (16, 17) with markers on the coating robots (12, 13), in order to achieve the large relative positioning accuracy, and/or
b) **that** the coating robots (12, 13) have sensors (19, 20), in particular on the robot hand axes, in order to detect their relative position and thereby enable the high relative positioning accuracy.

12. Coating device according to one of the claims 7 to 11, **characterized in**
a) **that** the nozzle applicator (2; 14, 15) is a printhead, and/or
b) **that** the nozzle applicator (2; 14, 15) emits a narrowly limited coating agent jet (3a, 3b) in contrast to a spray mist, and/or
c) **that** the nozzle applicator (2; 14, 15) has an application efficiency of at least 80%, 90%, 95% or 99% so that substantially all of the applied coating agent is completely deposited on the component (10) without overspray, and/or
d) **that** the nozzle applicator (2; 14, 15) has an area coating performance of at least 0.5 m²/min, 1m²/min, 2m²/min or at least 3m²/min, and/or
e) **that** the volume flow of the applied coating agent and thus the exit velocity of the coating agent is set in such a way that the coating agent does not bounce off the component (10) after it hits the component (10), and/or
f) **that** the exit velocity of the coating agent from the printhead is at least 5 m/s, 7 m/s or 10 m/s; and/or
g) **that** the exit velocity of the coating agent from the printhead is not more than 30 m/s, 20 m/s or 10 m/s; and/or
h) **that** the application distance (d) between nozzle (7) and component surface is at least 4 mm, 10 mm, 20 mm or 40 mm and/or, and/or
i) **that** the application distance (d) between nozzle (7) and component surface is at most 200 mm or 100 mm, and/or
j) **that** the coating agent is a paint, in particular a base coat, a clear coat, an effect paint, a mica paint or a metallic paint, and/or
k) **that** the coating is a water-based paint or solvent-based paint; and/or
l) **that** the nozzle applicator (2; 14, 15) has at least one electrically controllable actuator in order to eject drops of the coating agent from the nozzle applicator (2; 14, 15), in particular a magnetic actuator or a piezo actuator.

## Revendications

1. Procédé de revêtement pour le revêtement de composants (10) avec un applicateur à buses (2 ; 14, 15) avec plusieurs buses (7), plus particulièrement pour l'application d'une peinture, d'un adhésif, d'un matériau isolant, d'un matériau d'étanchéité ou d'une amorce, **caractérisé en ce que** l'applicateur à buses (2 ; 14, 15) est utilisé, au choix,
a) avec une performance de revêtement de surface élevée, plus particulièrement pour le revêtement de surfaces, dans lequel l'applicateur à buses (2 ; 14, 15) pour le revêtement avec la performance de revêtement de surface élevée fonctionne dans un mode de projection avec un jet de produit de revêtement cohérent dans la direction longitudinale (3a), contrairement à un jet de gouttelettes (3b), constitué de gouttelettes qui sont séparées les unes des autres dans la direction longitudinale du jet de gouttelettes (3b) ou
b) avec une performance de revêtement de surface faible, plus particulièrement pour le revêtement de détails, dans lequel l'applicateur à buses (2 ; 14, 15) pour le revêtement avec la performance de revêtement de surface faible fonctionne dans un mode gouttes avec un jet de gouttelettes (3b) qui est constitué de gouttelettes qui sont séparées les unes des autres dans la direction longitudinale du jet de gouttelettes (3b), contrairement au jet de produit de revêtement (3a) qui est cohérent dans la direction longitudinale du jet de produit de revêtement (3a).

2. Procédé de revêtement selon la revendication 1,
**caractérisé en ce que**
a) les buses (7) dans l'applicateur à buses (2 ; 14, 15) sont juxtaposées dans une rangée de buses (8) ;
b) l'applicateur à buses (2 ; 14, 15) est déplacé le long d'une trajectoire prédéterminée (6) au-dessus de la surface du composant à revêtir (10),
c) l'applicateur à buses (2 ; 14, 15) pour le revêtement avec la performance de revêtement de surface élevée est tourné de sorte que la rangée de buses (8) est orientée transversalement, plus particulièrement avec un angle (α) supérieur à 60°, supérieur à 75° ou perpendiculairement par rapport à la trajectoire (6) et
d) l'applicateur à buses (2 ; 14, 15) pour le revêtement avec la performance de revêtement de surface faible est tourné de sorte que la rangée de buses (8) est orientée longitudinalement, plus particulièrement parallèlement ou avec un angle (α) inférieur à 60°, inférieur à 45° voire inférieur à 20°, par rapport à la trajectoire (6) et/ou
e) l'applicateur à buses (2 ; 14, 15) est tourné, pendant le déplacement, le long de la trajectoire prédéterminée (6).

3. Procédé de revêtement selon la revendication 2,
**caractérisé en ce que**
a) l'applicateur à buses (2 ; 14, 15) comprend plusieurs rangées de buses parallèles (8), dans chacune desquelles sont juxtaposées plusieurs buses (7),
b) lors du revêtement avec la performance de revêtement de surface faible, toutes les rangées de buses (8) de l'applicateur à buses (2 ; 14, 15) ne sont pas activées, plus particulièrement une seule rangée de buses (8) ou une partie d'une rangée de buses
et
c) lors du revêtement avec la performance de revêtement de surface élevée, plusieurs rangées de buses (8) de l'applicateur à buses (2 ; 14, 15) sont activées, plus particulièrement toutes les rangées de buses (8).

4. Procédé de revêtement selon l'une des revendications précédentes, **caractérisé en ce que**
a) un premier applicateur à buses (14) est guidé par un premier robot de revêtement (12) au-dessus de la surface du composant à revêtir (10),
b) un deuxième applicateur à buses (15) est guidé par un deuxième robot de revêtement (13) au-dessus de la surface du composant à revêtir (10) et
c) les deux applicateurs à buses (14, 15) sont positionnés par les deux robots de revêtement (12, 13) avec une grande précision de positionnement relatif avec une tolérance de positionnement inférieure à 2 mm, 1 mm, 500 µm, 200 µm, 100 µm ou 50 µm au-dessus de la surface du composant à revêtir (10).

5. Procédé de revêtement selon la revendication 4,
**caractérisé en ce que**
a) la position spatiale des deux applicateurs à buses (14, 15) et/ou de l'objet à revêtir est mesurée au moyen d'un système de mesure optique (16, 17), plus particulièrement au moyen d'un système de mesure basé sur une caméra (16, 17) avec des marques sur les robots de revêtement (12, 13), afin d'obtenir la grande précision de positionnement relatif et/ou
b) les robots de revêtement (12, 13) comprennent des capteurs (19, 20), plus particulièrement au niveau des axes des poignets des robots, afin de mesurer leur position relative et donc de permettre la grande précision de positionnement relatif.

6. Procédé de revêtement selon l'une des revendications précédentes, **caractérisé en ce que**
a) lors du revêtement de surfaces de composants fortement incurvées, seule une première partie (4) des buses (7) sont activées, tandis qu'une deuxième partie (5) des buses (7) sont inactives et
b) lors du revêtement de surfaces de composants non incurvées, plus particulièrement de surface de composants planes, la deuxième partie (5) des buses (7) sont également activées.

7. Dispositif de revêtement pour le revêtement de composants (10) avec un produit de revêtement, plus particulièrement pour l'application d'une peinture, d'un adhésif, d'un matériau isolant, d'un matériau d'étanchéité ou d'une amorce, avec
a) un applicateur à buses (2 ; 14, 15) avec plusieurs buses (7) pour l'application du produit de revêtement sur les composants à revêtir (10),
b) un robot de revêtement multiaxial (12, 13), qui guide l'applicateur à buses (2 ; 14, 15) le long d'une trajectoire prédéterminée (6) au-dessus de la surface des composants à revêtir (10) et
c) un dispositif de commande (18), qui contrôle l'applicateur à buses (2 ; 14, 15) et le robot de revêtement (12, 13),
**caractérisé en ce que** le dispositif de commande (18) contrôle l'applicateur à buses (2 ; 14, 15), au choix,
d) avec une performance de revêtement de surface élevée, plus particulièrement pour le revêtement de surfaces, dans lequel l'applicateur à buses (2 ; 14, 15) pour le revêtement avec la performance de revêtement de surface élevée fonctionne dans un mode de projection avec un jet de produit de revêtement cohérent dans la direction longitudinale (3a), contrairement à un jet de gouttelettes (3b), constitué de gouttelettes qui sont séparées entre elles dans la direction longitudinale du jet de gouttelettes (3b) ou
e) avec une performance de revêtement de surface faible, plus particulièrement pour le revêtement de détails, dans lequel l'applicateur à buses (2 ; 14, 15) pour le revêtement avec la performance de revêtement de surface faible fonctionne dans un mode de gouttes avec un jet de gouttelettes (3b), constitué de gouttelettes, qui sont séparées entre elles dans la direction longitudinale du jet de gouttelettes (3b), contrairement au jet de produit de revêtement (3a) qui est cohérent dans la direction longitudinale du jet de produit de revêtement (3a).

8. Dispositif de revêtement selon la revendication 7, **caractérisé en ce que**
a) les buses (7) dans l'applicateur à buses (2 ; 14, 15) sont juxtaposées dans une rangée de buses (8),
b) le dispositif de commande (18) contrôle le robot de revêtement de sorte que l'applicateur à buses (2 ; 14, 15) est tourné,
c) l'applicateur à buses (2 ; 14, 15) pour le revêtement avec la performance de revêtement de surface élevée est tourné par le robot de revêtement de sorte que la rangée de buses (8) est orientée transversalement, plus particulièrement avec un angle (α) supérieur à 60°, supérieur à 75° ou perpendiculairement par rapport à la trajectoire (6) et
d) l'applicateur à buses (2 ; 14, 15) pour le revêtement avec la performance de revêtement de surface faible est tourné par le robot de revêtement de sorte que la rangée de buses (8) est orientée longitudinalement, plus particulièrement parallèlement ou avec un angle (α) inférieur à 60°, inférieur à 45° voire inférieur à 20°, par rapport à la trajectoire (6) et/ou
e) l'applicateur à buses (2 ; 14, 15) est tourné, pendant le déplacement, le long de la trajectoire prédéterminée (6).

9. Dispositif de revêtement selon la revendication 8,
**caractérisé en ce que**
a) l'applicateur à buses (2 ; 14, 15) comprend plusieurs rangées de buses parallèles (8), dans chacune desquelles sont juxtaposées plusieurs buses (7),
b) le dispositif de commande (18) contrôle l'applicateur à buses (2 ; 14, 15) de sorte que, lors du revêtement avec la performance de revêtement de surface faible, toutes les rangées de buses (8) de l'applicateur à buses (2 ; 14, 15) ne sont pas activées, plus particulièrement une seule rangée de buses (8) ou une partie d'une rangée de buses et
c) le dispositif de commande (18) contrôle l'applicateur à buses (2 ; 14, 15) de sorte que, lors du revêtement avec la performance de revêtement de surface élevée, plusieurs rangées de buses (8) de l'applicateur à buses (2 ; 14, 15) sont activées, plus particulièrement toutes les rangées de buses (8).

10. Dispositif de revêtement selon l'une des revendications 8 à 9, **caractérisé en ce que**
a) un premier applicateur à buses (14) est guidé par un premier robot de revêtement (12) au-dessus de la surface (1) du composant à revêtir (10),
b) un deuxième applicateur à buses (15) est guidé par un deuxième robot de revêtement (13) au-dessus de la surface (1) du composant à revêtir (10) et
c) les deux applicateurs à buses (14, 15) sont positionnés par les deux robots de revêtement (12, 13) avec une grande précision de positionnement relatif avec une tolérance de positionnement inférieure à 2 mm, 1 mm, 500 µm, 200 µm, 100 µm ou 50 µm au-dessus de la surface (1) du composant à revêtir (10).

11. Dispositif de revêtement selon la revendication 10,
**caractérisé en ce que**
a) la position spatiale des deux applicateurs à buses (14, 15) et/ou de l'objet à revêtir est mesurée au moyen d'un système de mesure optique (16, 17), plus particulièrement au moyen d'un système de mesure basé sur une caméra (16, 17) avec des marques sur les robots de revêtement (12, 13), afin d'obtenir la grande précision de positionnement relatif et/ou
b) les robots de revêtement (12, 13) comprennent des capteurs (19, 20), plus particulièrement au niveau des axes des poignets des robots, afin de mesurer leur position relative et donc de permettre la grande précision de positionnement relatif.

12. Dispositif de revêtement selon l'une des revendications 7 à 11, **caractérisé en ce que**
a) l'applicateur à buses (2 ; 14, 15) est une tête d'impression, et/ou
b) l'applicateur à buses (2 ; 14, 15) distribuer un jet de produit de revêtement étroitement limité (3a, 3b), contrairement à un brouillard de pulvérisation et/ou
c) l'applicateur à buses (2 ; 14, 15) présente un rendement d'application d'au moins 80 %, 90 %, 95 % ou 99 %, de sorte que globalement tout le produit de revêtement appliqué est déposé entièrement sur le composant (10), sans pulvérisation en excès et/ou
d) l'applicateur à buses (2 ; 14, 15) présente une performance de revêtement de surface d'au moins 0,5 m²/min, 1 m²/min, 2 m²/min ou d'au moins 3 m²/min et/ou
e) le débit volumique du produit de revêtement appliqué et donc la vitesse de sortie du produit de revêtement est ajustée de sorte que le produit de revêtement ne rebondit pas sur le composant (10) après l'impact sur le composant (10) et/ou
f) la vitesse de sortie du produit de revêtement hors de la tête d'impression est d'au moins 5 m/s, 7 m/s ou 10 m/s et/ou
g) la vitesse de sortie du produit de revêtement hors de la tête d'impression est de maximum 30 m/s, 20 m/s ou 10 m/s et/ou
h) la distance d'application (d) entre la buse (7) et la surface du composant est d'au moins 4 mm, 10 mm, 20 mm ou 40 mm et/ou
i) la distance d'application (d) entre la buse (7) et la surface du composant est de maximum 200 mm ou 100 mm et/ou
j) le produit de revêtement est une peinture, plus particulièrement une peinture de base, un vernis, une peinture à effet, une peinture à mica ou une peinture métallique et/ou
k) le produit de revêtement est une peinture à l'eau ou une peinture à solvants et/ou
l) l'applicateur à buses (2 ; 14, 15) comprend au moins un actionneur électrique afin d'éjecter des gouttes du produit de revêtement hors de l'applicateur à buses (2 ; 14, 15), plus particulièrement un actionneur magnétique ou un actionneur piézoélectrique.
